# EUROPEAN PATENT SPECIFICATION

(11) **EP 1 586 722 B1**
(45) Date of publication and mention of the grant of the patent: **03.09.2008**
(21) Application number: 04009050.8
(22) Date of filing: 16.04.2004
(51) Int. Cl.: E04F 13/08, E04F 15/02

(54) **Method for connecting individual ceramic products by a common substrate**
Verfahren zum Verbinden einzelner Keramikteile durch ein gemeinsames Substrat
Procédé pour connecter des produits céramiques individuelles par un substrat commun

(43) Date of publication of application: 19.10.2005
(73) Proprietor: NORDSON CORPORATION, Westlake, Ohio 44145-1110 (US)
(72) Inventor: Bernardelli, Daniele Giovanni, 20037 Milano (IT)
(74) Representative: Eisenführ, Speiser & Partner

(56) References cited:
- DE-A- 1 937 331
- DE-A- 10 061 477
- FR-A- 2 731 737
- PATENT ABSTRACTS OF JAPAN vol. 2000, no. 12, 3 January 2001 (2001-01-03) & JP 2000 248719 A (NORDSON KK), 12 September 2000 (2000-09-12)

## Description

The present invention relates to a method for connecting flat shaped ceramic products by a common substrate, comprising the steps of positioning the products side by side in a positional orientation, and fixing a common substrate to the products in an overlapping manner so that the common substrate is aligned essentially according to the positional orientation.

Such a method is used in certain applications which require a linking of a plurality of flat shaped ceramic products so as to create an array of products wherein the products are positioned side by side in a desired positional relationship and orientation relative to each other. For connecting the products to each other so as to create the array of products, a common substrate is provided which is fixed to the products. The common substrate defines a support so as to hold the products in a fixed relationship to each other. So, the common substrate serves as a 'bridge' overlapping the pieces and extending along the array of products.

In order to achieve a connection between the individual products positioned side by side, the common substrate is aligned essentially according to the positional orientation, which means that the common substrate overlaps and at the same time connects the individual products one after another.

FR 2731737 A discloses a flat shaped product consisting of form flat shaped elements which are connected together wherein beads of adhesive are applied on a surface of the flat shaped product.

In particular, the above described method is applied to tiles. Usually, a preformed mesh, web or paper grid is used as a common substrate onto which the ceramic products are fixed e.g. by means of a water based adhesive.

An object of the present invention to improve the above mentioned method so as to the overcome the drawbacks of the prior art and in particular to render manual operation superfluous and to allow a variation of position and size of the products.

In order to achieve the above and further objets, according to the present invention, there is provided a method as given in claim 1.

According to the present invention, the common substrate consists of adhesive which is directly applied onto and over the products. So, the common substrate is directly dispensed onto the products. This is done after the products have been positioned on an array which e.g. may correspond to a desired mosaic and be created with products of different sizes and/or colours.

Since according to the present invention the common substrate is produced at the same time when it is applied onto and over the products, a prefabrication of the common substrate as required in the prior art becomes superfluous. So, an advantage of the method according to the present invention is that no manual operation is required any more, but the method can be carried out in a completely automatic manner e.g. by using a robot. This results in an increase of the volume of production and of the quality and to a reduction of time and costs.

Further, the present invention guarantees to dispense the adhesive as a common substrate only where it is necessary. Moreover, the method according to the present invention is very flexible and can be adapted in accordance with the dimension, weight, material and/or thickness of the products to be connected. So, a consumption of superfluous material for creating the common substrate can be avoided resulting in a further decrease of the costs.

The adhesive is applied so as to form a plurality of beads and so as to intersect at least one bead with at least another bead in order to form a mesh structure comprising several cells. In such a structure, the cell size may be advantageously adapted in accordance with the dimensions, weight and form of the single product. Further, the adhesive is applied so as to provide at least one intersecting on each piece.

A further preferred embodiment of the present invention, wherein each product comprises at least two surfaces one of which is determined as being a substrate fixing surface, is characterized in that before step a) the products are adjusted so that their substrate fixing surfaces are essentially aligned to each other in order to ease the application of the adhesive. Sometimes, the individual products are supplied with the substrate fixing surfaces facing downwards so that in such a case it is more convenient to place the products upside down before applying the adhesive onto their substrate fixing surfaces.

In a further preferred embodiment of the present invention, before step a) the products are placed onto a transporting means, in particular a conveyor, which during step b) move the products past an adhesive dispensing means for applying the adhesive so as to form the common substrate. This embodiment is advantageous to provide an automation system for dispensing the adhesive.

In a further preferred embodiment, after step b) the applied adhesive now forming the common substrate is covered by a covering means, in particular a silicon paper, in order to protect the adhesive in particular during storage and transport of the connected array of the products and to provide a separation between stacked arrays of the products.

The above mentioned and other objects and features of the present invention will become apparent from the following description taken in conjunction with a preferred embodiment thereof with reference to the accompanying drawing, in which:

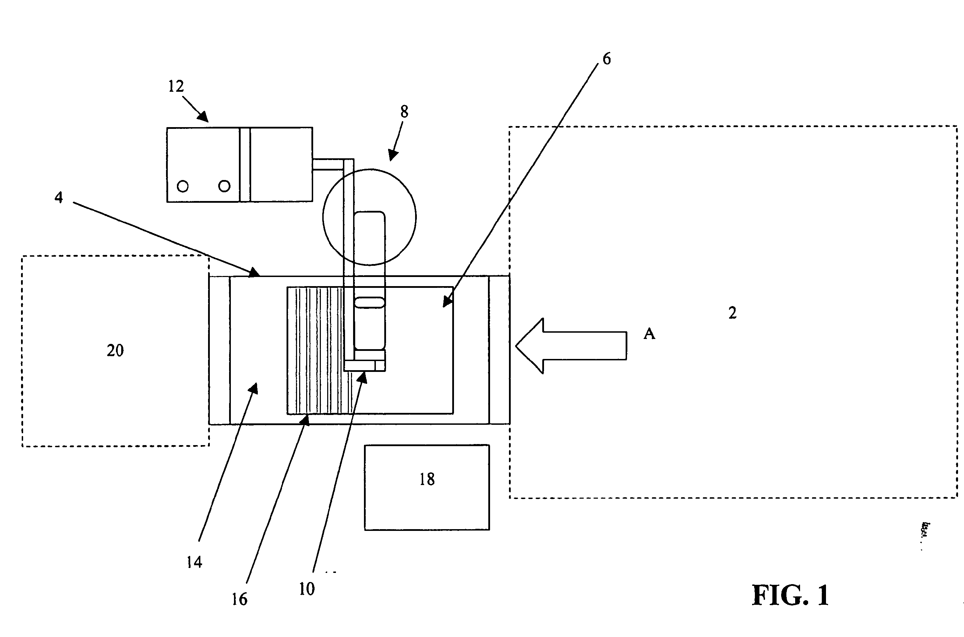

- Figure 1: is a schematic top view of an adhesive mesh application system according to a preferred embodiment of the present invention.

Figure 1 shows a schematic top view of an adhesive mesh application system which is used for connecting ceramic products like tiles by a common substrate formed as a mesh. Nevertheless, it should be noted here that the shown system can be used for connecting other pieces than ceramic products as well which pieces preferably comprise a flat shape, and that other kinds of a common substrate than a mesh can be used for connecting the pieces.

Figure 1 schemtically shows in dotted lines a ceramic array creation area 2 where the ceramic products (not shown) are produced and/or supplied. In direction of arrow A the ceramic products are moved from the ceramic array creation area 2 onto a conveyor 4 wherein the ceramic products are positioned side by side so as to form a ceramic array which is designated by reference numeral 6. In the embodiment shown in figure 1, the ceramic array 6 has a rectangular shape exhibiting a plurality of longitudinal rows of ceramic products extending along the length of the ceramic array 6 in the direction of arrow A and further exhibiting a plurality of transverse rows of ceramic products extending over the width of the ceramic array 6 at a right angle relative to the direction of arrow A. The longitudinal rows and the transverse rows extend parallel to each other, respectively. As further shown in figure 1, the single ceramic products each have a square shape; however, other shapes like e.g. a rectangular shape are possible as well. So, the ceramic array 6 forming a matrix of the ceramic products corresponds to a desired mosaic and, for example, could be also created with ceramic products of different sizes and/or colours.

The conveyor 4 includes an endless belt which is driven by a motor device (not shown) in the direction of arrow A and comprises a silicon carpet (not shown). The ceramic products are placed onto a conveyor 4 so that the top of the ceramic array 6 lays on the silicon carpet. In cases where the ceramic products are supplied from the ceramic array creation area 2 with the top facing upwards, it is necessary to put the ceramic products upside down onto the conveyor 4. For placing the ceramic products onto the conveyor 4, a positioning device is provided which is not shown and may comprise a robot.

As further shown in figure 1, the system comprises an adhesive dispensing robot 8 which includes a dispensing gun 10 coupled to an adhesive melter 12. The dispensing gun 10 extends over the conveyor 4. So, the portion of the conveyor 4 below the dispensing gun 10 defines a dispensing area 14 where the ceramic array 6 is passed through in the direction of arrow A. The dispensing gun 10 comprises one nozzle or nozzle opening or a small number of nozzles or nozzle openings in a first embodiment (not shown) or a plurality of nozzles or nozzle openings which are arranged in a row extending over the whole width of the dispensing array 14, i.e. essentially in a rectangular angle relative to the direction of arrow A, in a second embodiment (not shown).

When moving past the dispensing gun 10, the bottom or back of the ceramic array 6 faces upwards to the dispensing gun 10, whereas the top of the ceramic array 6 lays on the conveyor 4. The dispensing gun 10 dispenses beads of adhesive supplied from the melter 12 onto the back of the ceramic array 6 so as to form a common substrate 16. In case of the above mentioned first embodiment comprising only one or a small number of nozzles or nozzle openings, the dispensing gun 10 is moveable in a reciprocating manner at least over the whole width of the dispensing array 14. In case of the second embodiment comprising a plurality of nozzles or nozzle openings arranged in a row, the dispensing gun 10 is provided in a fixed position, i.e. stationary, so as to extend at least of the whole width of the dispensing array 14, but a control unit is provided for controlling the nozzles or nozzle openings so that either all nozzles or nozzle openings dispense beads so as to form multiple beads extending along the length of the dispensing array 14 in the direction of arrow A or the nozzles or nozzle openings are activated and deactivated one after another so as to form a bead extending along the whole width of the ceramic array 6. Additionally, the dispensing gun 10 can also be moveable in a reciprocating manner over a certain distance along the length of the dispensing array 14 in the direction of arrow A.

Usually in certain time intervals the conveyor 4 stops so that the movement of the conveyor 4 is periodically interrupted. With the conveyor 4 stopped, an adhesive bead can be dispensed on the back of the ceramic array 6 so as to extend along the whole width of the ceramic array 6 in a transverse orientation relative to the direction of arrow A. In the first embodiment, the dispensing robot 8 moves the dispensing gun 10 over the width of the ceramic array 6, and at the same time the dispensing gun 10 is dispensing the adhesive bead on the back of the ceramic array 6. In the second embodiment, the nozzles or nozzle openings are controlled so as to activate them one after another in order to form an adhesive bead on the back on the ceramic array 6 in a transverse orientation relative to the direction of arrow A. So, a plurality of parallel adhesive strips are formed which extend along the whole width of the ceramic array 6 in a transverse orientation relative to the direction of arrow A, wherein each adhesive strip extends over a transverse row of ceramic products so as to connect them as shown in figure 1.

Additionally (but not shown in figure 1) adhesive beads are dispensed in a longitudinal direction corresponding to the direction of arrow A so as to connect the ceramic products in the longitudinal rows. This is achieved by moving the conveyor 4 and/or the dispensing gun 10 in direction of arrow A.

After dispensing the adhesive is fixed to the back of the ceramic array 6 due to its adhesiveness. So, by directly dispensing adhesive beads onto the back of the ceramic array 6, the common substrate 16 is created which connects the individual ceramic products of the ceramic array 6 and keeps them in a certain positional relationship to each other.

Hot melt adhesive made of polyurethane is used which is cured after having dispensed on the back of the ceramic array 6 so as to form a steady but elastic substrate.

After application of the adhesive, the layout of the structure is like a web consisting of a plurality of cells, but wherein the cell size depends on the dimensions, weight, material and thickness of the single ceramic product. In particular if adhesive beads are dispensed in longitudinal and transverse directions, a mesh structure is formed by intersecting the transverse adhesive strips with the longitudinal adhesive strips wherein preferably at least one intersecting is provided on each ceramic product.

In order create a desired dispensing pattern in accordance with certain requirements (e.g. in a manner as described above), the system further comprises a control station 18 for controlling the dispensing robot 8, in particular the movement of the dispensing gun 10 and the supply of adhesive by the melter 12, and the conveyor 4. The control station 18 also serves as a human interface for an operator. With respect to the control station 18, it is added that in figure 1 the required connections are not shown.

At the end of the dispensing process as described above, the conveyor 4 continues transporting the ceramic array 6 with the adhesive substrate 16 fixed to their back out of the dispensing array 14 to a packing array 20 (indicated by dotted lines in figure 1) where a plurality of ceramic arrays 6 are stacked one upon another. In order to avoid an undesired fixing of the different layers of the stacked ceramic arrays 6, before stacking in the packing array 20 a silicon paper (not shown) is placed upon the substrate 16 so as to cover the ceramic array 6 and to separate the different layers of the stacked ceramic arrays 6 in the packing area 20. This can be done by e.g. a further robot (not shown).

## Claims

1. A method for connecting flat shaped ceramic products by a common substrate, comprising the steps of
a) positioning the products side by side in a positional orientation; and
b) fixing a common substrate (16) to the products in an overlapping manner so that the common substrate (16) is aligned essentially according to the positional orientation;
wherein
during step b) a plurality of spaced apart beads of hotmelt polyurethane adhesive, which is cured after being dispensed, are applied onto and over the products so as to intersect at least one bead with at least another bead by providing at least one intersecting on each product whereby only said beads of adhesive form the common substrate (16) keeping the products in a certain relationship to each other.

2. The method according to claim 1,
wherein the beads of adhesive are applied so as to form a mesh structure.

3. The method according to claim 1 or 2,
wherein each product comprises at least two surfaces one of which is determined as being a substrate fixing surface,
**characterized in that** before step a) the products are adjusted so that their substrate fixing surfaces are essentially aligned to each other.

4. The method according to claim 3,
wherein before step a) the products are placed upside down.

5. The method according to at least any one of the preceding claims,
wherein before step a) the products (6) are placed onto a transporting means (4), in particular a conveyor, which during step b) move the products (6) past an adhesive dispensing means (10) for applying the adhesive so as to form the common substrate (16).

6. The method according to at least any one of the preceding claims,
wherein after step b) the applied adhesive is covered by a covering means, in particular a silicon paper.

7. The method according to at least any one of the preceding claims,
wherein the products are tiles.

## Patentansprüche

1. Verfahren zum Verbinden von flachgeformten Keramikprodukten durch ein gemeinsames Substrat, mit den Schritten,
a) die Produkte nebeneinander in einer Lageorientierung anzuordnen; und
b) ein gemeinsames Substrat (16) an den Produkten in einer überlappenden Weise zu befestigen, so dass das gemeinsame Substrat (16) im wesentlichen in Abhängigkeit von der Lageorientierung ausgerichtet wird;
wobei während Schritt b) eine Vielzahl von voneinander beabstandeten Raupen aus Heißschmelzpolyurethanklebstoff auf und über die Produkte aufgebracht wird, so dass sich mindestens eine Raupe mit mindestens einer anderen Raupe schneidet, indem mindestens ein Schnittpunkt auf jedem Produkt ausgebildet wird, wodurch nur diese Klebstoffraupen das gemeinsame Substrat bilden, welches die Produkte in einer bestimmten Relativanordnung zueinander hält.

2. Verfahren nach Anspruch 1, bei welchem die Klebstoffraupen aufgebracht werden, um eine Netzstruktur zu bilden.

3. Verfahren nach Anspruch 1 oder 2, bei welchem jedes Produkt mindestens zwei Oberflächen aufweist, von denen eine als Substratbefestigungsfläche bestimmt ist,
**dadurch gekennzeichnet, dass** vor Schritt a) die Produkte so justiert werden, dass ihre Substratbefestigungsflächen im wesentlichen zueinander ausgerichtet sind.

4. Verfahren nach Anspruch 3,
bei welchem vor Schritt a) die Produkte verkehrt herum angeordnet werden.

5. Verfahren nach mindestens einem der vorangegangenen Ansprüche,
bei welchem vor Schritt a) die Produkte (6) auf einem Transportmittel (4), insbesondere einem Förderband, angeordnet werden, welches während Schritt b) die Produkte (6) an einer Klebstoffabgabeeinrichtung (10) zum Auftrag des Klebstoffes vorbeibewegt, um das gemeinsame Substrat (16) zu bilden.

6. Verfahren nach mindestens einem der vorangegangenen Arisprüchen,
bei welchem nach Schritt b) der aufgebrachte Klebstoff von einem Abdeckmittel, insbesondere einem Silikonpapier, abgedeckt wird.

7. Verfahren nach mindestens einem der vorangegangenen Ansprüche,
bei welchem die Produkte Kacheln sind.

## Revendications

1. Procédé pour connecter des produits plats en céramique par l'intermédiaire d'un substrat commun, comprenant les étapes consistant à :
a) positionner les produits côte à côte dans une orientation positionnelle ; et
b) fixer un substrat commun (16) aux produits de manière chevauchante de sorte que le substrat commun (16) soit aligné essentiellement selon l'orientation positionnelle ;
dans lequel
au cours de l'étape b) une pluralité de perles espacées les unes des autres d'adhésif thermofusible de polyuréthanne, qui est traité thermiquement après avoir été distribué, sont appliquées sur et par-dessus les produits afin de croiser au moins une perle avec au moins une autre perle en fournissant au moins un croisement sur chaque produit, moyennant quoi seulement lesdites perles d'adhésif forment le substrat commun (16), maintenant les produits dans une certaine relation les uns par rapport aux autres.

2. Procédé selon la revendication 1,
dans lequel les perles d'adhésif sont appliquées afin de former une structure maillée.

3. Procédé selon la revendication 1 ou 2, dans lequel chaque produit comprend au moins deux surfaces dont une est déterminée comme étant une surface de fixation de substrat,
**caractérisé en ce qu'**avant l'étape a) les produits sont réglés de sorte que leurs surfaces de fixation de substrat soient essentiellement alignées les unes par rapport aux autres.

4. Procédé selon la revendication 3,
dans lequel avant l'étape a) les produits sont placés à l'envers.

5. Procédé selon au moins l'une quelconque des revendications précédentes,
dans lequel avant l'étape a) les produits (6) sont placés sur un moyen de transport (4), en particulier un transporteur, qui au cours de l'étape b) déplace les produits (6) devant un moyen de distribution d'adhésif (10) pour appliquer l'adhésif afin de former le substrat commun (16).

6. Procédé selon au moins l'une quelconque des revendications précédentes,
dans lequel après l'étape b) l'adhésif appliqué est recouvert par un moyen de couverture, en particulier un papier de silicium.

7. Procédé selon au moins l'une quelconque des revendications précédentes,
dans lequel les produits sont des carreaux.
